# FASCICULE DE BREVET EUROPEEN

(11) **EP 0 432 231 B1**
(45) Date de publication et mention de la délivrance du brevet: **10.02.1993**
(21) Numéro de dépôt: 90907171.4
(22) Date de dépôt: 30.04.1990
(51) Int. Cl.: A22C 13/00

(54) **PROCEDE POUR LA PREPARATION DE BOYAUX NATURELS EN CHARCUTERIE ET LE DISPOSITIF POUR SA MISE EN OEUVRE**
VERFAHREN ZUR HERSTELLUNG VON NATURSCHLÄUCHEN FÜR FLEISCHSPEISEN UND ANLAGE ZUR BEWERKSTELLIGUNG DAVON
METHOD FOR PREPARING NATURAL GUT IN THE BUTCHER'S TRADE AND A DEVICE FOR IMPLEMENTING SAME

(30) Priorité: 03.05.1989 FR 8906390
(43) Date de publication de la demande: 19.06.1991
(73) Titulaire: JONNARD, Pierre, F-38230 Pont-de-Chéruy" (FR)
(72) Inventeur: JONNARD, Pierre, F-38230 Pont-de-Chéruy" (FR)
(74) Mandataire: Dupuis, François
(86) Numéro de dépôt international: FR9000309
(87) Numéro de publication internationale: WO9013226

(56) Documents cités:
- EP-A- 60 926
- DE-B- 1 504 982
- FR-A- 2 462 871
- FR-A- 2 539 959

## Description

### Procédé pour la préparation de boyaux naturels en charcuterie et le dispositif pour sa mise en oeuvre.

L'invention se rattache au secteur technique de la boyauderie.

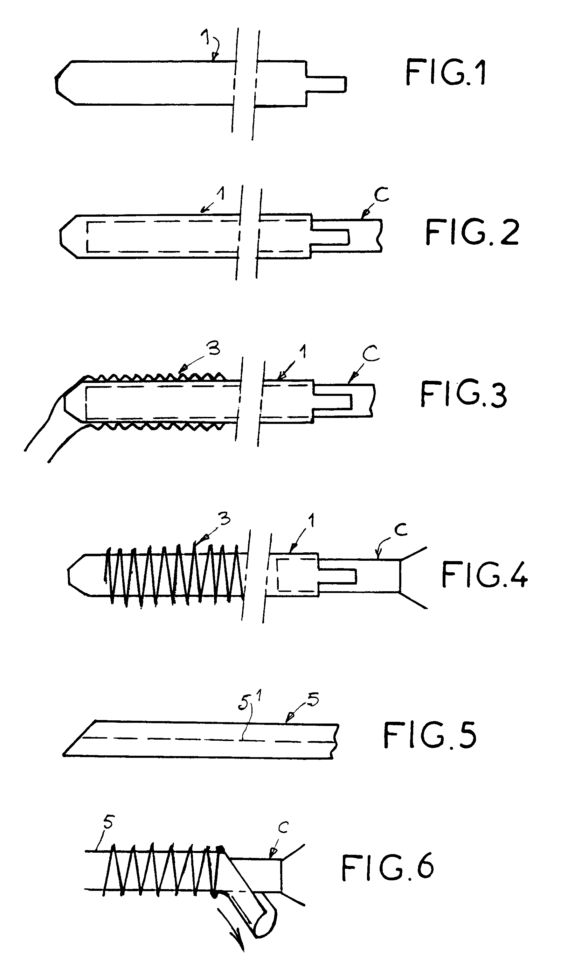

Afin de comprendre l'intérêt de l'invention, il y a lieu préalablement de rappeler l'évolution de la technique de préparation des boyaux sur la canule avant l'opération d'embossage de la bande en se référant aux figures 1 à 6.

Initialement, le boyau était présenté en masses salées, puis en saumure permettant ainsi une gain de temps et une meilleure glisse pour l'enfilement du boyau sur la canule On a également présenté le boyau en forme de plis en accordéon établis dans sa longueur en utilisant en particulier un tube faisant office de support interne.

Selon cette mise en oeuvre, on peut effectuer le transfert direct du boyau du tube sur la canule. Il est possible également, afin d'obtenir de grandes longueurs de boyaux, d'introduire une pluralité de tronçons de boyaux mis en plis et se chevauchant partiellement.

Selon un exemple non limitatif illustré figure 1, le tube est réalisé sous la forme d'une gaine souple (1) généralement en matière plastique, fermée à l'une de ses extrémités. On utilise alors pour monter le boyau, un support rigide (2) autour duquel s'engage la gaine (1) (figure 2). Puis on monte le boyau (3) sur la gaine (1) en introduisant de l'eau ou de la saumure pour faciliter la glisse (figure 3). Pour positionner le boyau sur la canule (C), on enfile alors la gaine sur celle-ci (figure 4), puis on retire la gaine en retenant le boyau qui se dépose sur la canule, ceci grâce à une opération de maintien du boyau.

On procède ensuite à l'embossage et formation des saucisses et.,saucissons ou produits similaires.

En pratique, ces opérations sont longues et fastidieuses. En outre, on a constaté une certaine fragilité de la gaine lors de son montage sur la canule.

Pour tenter de remédier à ces inconvénients, il a été proposé, selon l'art antérieur, d'insérer une languette rigide associée à la gaine pour faciliter le montage. En cours d'utilisation, on ressort la languette par l'arrière et la gaine par l'avant. Cette opération est cependant peu pratique.

Il a également été proposé par le Brevet FR 2.462.871, d'agencer la gaine (5) notamment avec un prédécoupage longitudinal (5.1), de placer l'assemblage de différents tronçons de boyaux sur la canule puis d'enlever la gaine (figure 5). Ainsi lors du montage sur la canule, il suffit de prolonger le mouvement vers l'arrière en tenant le boyau avec deux doigts pour déchirer et évacuer la gaine (figure 6). Ce procédé évite de changer le sens des pliages, permet le montage en un seul geste et en cas de chevauchement des tronçons de boyaux, évite de les défaire, car l'effort de traction exercé pour retirer la gaine comprime les pliages en accordéon dans le sens du montage.

Cette technique présente cependant certains inconvénients. Il faut tout d'abord que le diamètre de la gaine soit proche de la dimension du boyau. De plus, la gaine étant quasiment étanche, à l'exception de la ligne de prédécoupe qui définit des micro-perforations,il est difficile de faire tremper le boyau avant l'utilisation.

Ainsi, toutes les techniques actuelles de préparation des boyaux en vue de leur .embossage, présentent certains inconvénients.

Un autre inconvénient lié à l'ensemble des techniques antérieures réside dans la nécessité de rapporter une gaine à chaque fois que la quantité de boyaux disposés sur la gaine et la canule a été utilisée. En pratique, et selon les techniques utilisées, on peut être amené à rapporter une gaine tous les 18 à 20 mètres de boyaux, ce qui entraîne de nombreuses manipulations.

Le but recherché selon l'invention était donc de proposer une nouvelle méthode, simple, facile à mettre en oeuvre et pouvant accessoirement entrer dans le cadre d'une automatisation de production.

Selon une première caractéristique, le procédé selon l'invention est remarquable en ce que l'on utilise un moyen support faisant office de gaine, préalablement en forme de feuille plate, découpée aux formes et dimensions à obtenir, ledit moyen support formant gaine étant mis en forme tubulaire par une ou des déformations et enroulements successifs avec un faible chevauchement de ses bordures longitudinales, la gaine ainsi obtenue recevant le boyau puis étant disposée sur la canule.

Selon une autre caractéristique, le procédé est remarquable en ce que, dans un processus d'automatisation, la gaine est enroulée en bobine, et son extrémité est déroulée puis introduite dans un dispositif de mise en forme autorisant à sa sortie, une présentation de la gaine en rouleau avec des bordures longitudinales se chevauchant partiellement.

Selon une autre caractéristique, le procédé est remarquable en ce que l'on combine la mise en forme en continu de la gaine et la dépose du boyau.

Selon une autre caractéristique, le dispositif de mise en oeuvre du procédé est remarquable en ce qu'il comprend un premier élément formant entonnoir présentant un côté aplati de largeur égale à la largeur de la bande de formation de la gaine et un côté cylindrique dont la circonférence est sensiblement supérieure au diamètre de la gaine roulée, ledit élément de section dégressive étant relié à un second élément de forme tronconique ; et en ce que ledit second élément présente une déformation intérieure autorisant le guidage de la gaine préformée et le chevauchement partiel de ses extrémités longitudinales, et en ce que la gaine étant soit prédécoupée initialement, soit découpée par un moyen disposé à la sortie dudit dispositif.

Ces caractéristiques et d'autres encore ressortiront bien de la suite de la description.

Pour fixer l'objet de l'invention illustré d'une manière non limitative aux figures des dessins où :
- les figures 1 à 6 sont des vues à caractère schématique illustrait les différentes techniques selon l'art antérieur ;

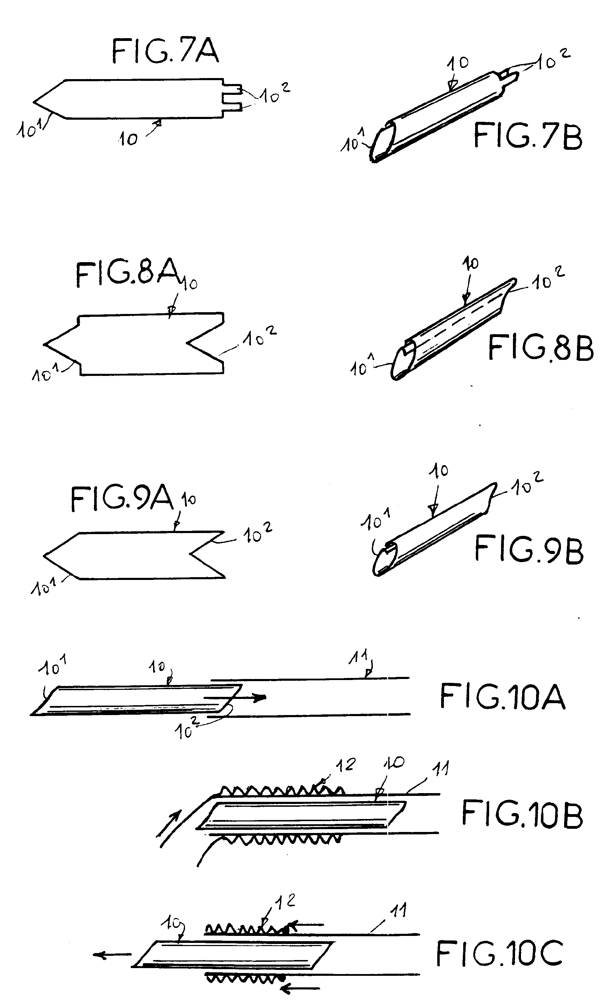

- les figures 7A, 7B, 8A, 8B, 9A, 9B sont des vues à caractère schématique illustrant la mise en forme de la gaine selon l'invention en forme de feuille support, d'une position initiale à plat à une positions finale enroulée ;
- les figures 10A, 10B, 10C montrent le montage manuel de la feuille support selon l'invention en vue de la dépose du boyau sur la canule ;

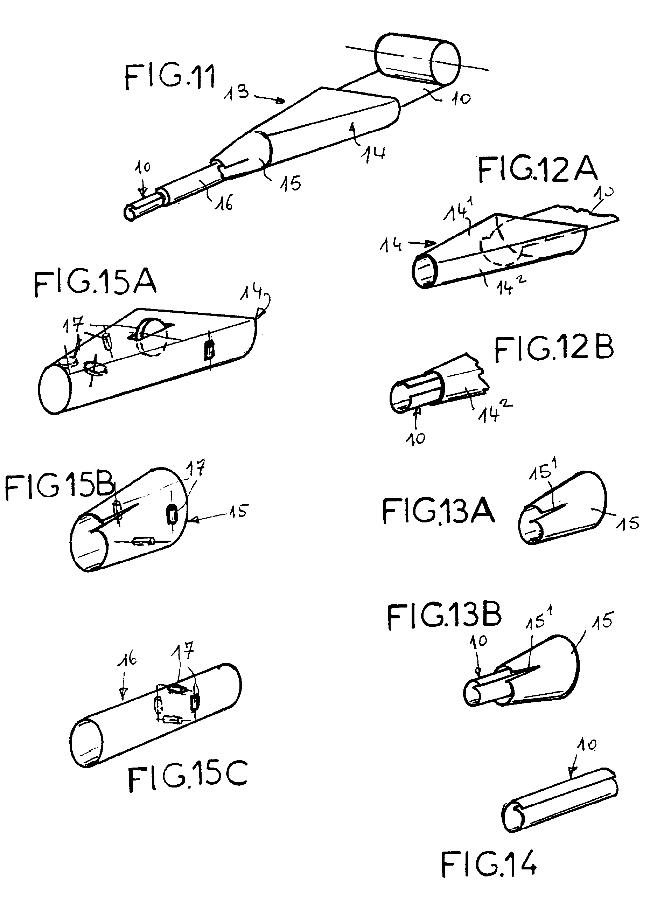

- la figure 11 est une vue montrant le dispositif de mise en forme de la feuille support selon l'invention ;
- les figures 12A, 12B montrent la mise en forme de la feuille support dans la première phase d'utilisation d'un premier moyen du dispositif, la figure 12A montrant le début de préformage de la feuille dans le dispositif et la figure 12B la sortie de la feuille support ;
- les figures 13A, 13B montrent la mise en forme de la feuille support dans le second moyen du dispositif ;
- la figure 14 montre la mise en forme de la feuille support dans le troisième moyen du dispositif ;
- les figures 15A, 15B, 15C sont des vues en variante du premier moyen du dispositif de mise en! forme de la feuille selon l'invention.

Afin de rendre plus concret l'objet de l'invention, on le décrit maintenant d'une manière non limitative aux figures des dessins.

Le procédé de préparation et de mise en place des boyaux sur la canule (C) d'une poussoir de remplissage vise à utiliser un moyen support faisait office de gaine préalablement en forme de feuille plate qui est découpée aux formes et dimensions à obtenir, puis mise en forme tubulaire par une ou des déformations, et enroulements successifs avec un faible chevauchement de ses bordures longitudinales, ladite gaine ainsi obtenue recevant le boyau puis. étant disposée sur la canule.

La gaine (10) est donc préenroulée en bobine avec les formes préétablies et prédécoupées, ou bien la gaine peut se présenter sous la forme de différentes feuilles à plat après découpage. On a illustré aux figures 7A, 7B, 8A, 8B, 9A, 9B, différentes configurations de la gaine dans une position à plat puis enroulée. Ladite gaine présente ainsi à l'avant une forme en pointe ou biseau (10.1), pour faciliter l'engagement du boyau et dans sa partie arrière (10.2) avec une partie découpée sous forme de languettes (10.2) pour faciliter son engagement sur la canule. La partie arrière peut être définie par deux pates en regard ou être conformée lors de l'enroulement de la feuille pour faire apparaître une seule partie d'extrémité. Il y a lieu de noter qu'avantageusement, la forme en pointe (10.1) se trouve dans un autre plan que les languettes préformes, en donnant ainsi le sens de pliage et d'engagement sur la canule. Dans le caddie d'une présentation de la gaine en bobine, les formes découpées en avant et en arrière de chaque tronçon de gaine sont avantageusement complémentaires.

La gaine mise en oeuvre selon l'invention présente plusieurs avantages. Son coût de fabrication est réduit et elle permet une adaptation à tous diamètre de boyaux. En outre, en l'absence d'étanchéité entre les parties se chevauchant, on peut encore procéder à un trempage de l'ensemble avant introduction sur la canule.

La gaine se présentant sous forme d'une feuille support à plat peut être enroulée manuellement pièce par pièce, ou être montée mécaniquement dans le cadre d'un automatisme.

Dans la première mise en oeuvre et en se référant aux figures 10A, 10B, 10C, la gaine (10) est enroulée manuellement et introduite dans un tube (11), les extrémités de la gaine se chevauchant. Puis le boyau (12) est monté sur le tube en pliage accordéon. On procède ensuite à l'enlèvement du tube de manière que le boyau vienne sur la gaine. Celle-ci est ensuite enfilée sur la canule (C). Après mise en place, la gaine est retirée de la canule, de manière similaire à la technique antérieure, et l'opération d'embossage de la viande peut s'effectuer.

Dans une autre mise en oeuvre susceptible d'entrer dans un processus d'automatisation, la gaine est enroulée en bobine, et l'extrémité de la gaine déroulée est introduite dans un dispositif (13) de mise en forme autorisant, à la sortie de ce dernier, une présentation de la gaine en rouleau avec les bordures longitudinales se chevauchant partiellement. Afin d'effectuer la séparation des différents tronçons de gaine, on peut considérer qu'un prédécoupage a été effectué sur la gaine enroulée lors de sa fabrication, et dans ce cas, on obtient des longueurs de gaine préétablies, aux formes et dimensions désirées. En variante, on prévoit à la sortie du dispositif de mise en rouleau, des moyens de découpage du type ciseaux ou autres pour des formes simples des extrémités de la gaine, ces découpes se faisant avantageusememt en oblique pour permettre l'introduction et l'enlèvement de la gaine sur la canule.

Ainsi selon une mise en oeuvre non limitative, le dispositif (13) de mise en forme comprend un premier élément (14) creux intérieurement et présentant un côté (14.1) aplati de largeur égale à la largeur de la bande et un côté cylindrique (14.2) de telle sorte que la circonférence soit sensiblement supérieure au diamètre de la gaine roulée. Ce premier élément forme un entonnoir de section dégressive, de sorte que la gaine est progressivement mise en forme sans toutefois que ses extrémités se chevauchent, la gaine présentant une forme en tubulure. Le premier élément (14) est connecté ou relié par tous moyen de liaison approprié avec un second élément (15) profilé de forme tronconique. Ce second élément présente en outre une déformation (15.1) intérieure permettant le guidage de la gaine préformée et le chevauchement partiel de ses extrémités longitudinales. A la sortie du second élément, la gaine est définitivement formée. A titre complémentaire mais non obligatoire, la gaine ainsi passe dans un tube cylindrique (16) pour compléter sa mise en forme et la régularité de sa présentation.

En variante, le dispositif (13) peut être monobloc. Il est également agencé pour recevoir un conduit d'alimentation de fluide (non illustré) assurant un écoulement sur la canule pour faciliter l'introduction de la gaine sur la canule.

Dans une mise en oeuvre particulièrement avantageuse, le tube (16) est celui sur lequel on monte le boyau et l'on obtient ainsi un travail en continu.

On peut également combiner la mise en forme en continu de la gaine et la dépose du boyau sur le support supprimant ainsi toutes les opérations antérieures de rajout de la partie de gaine sur la canule.

Dans le cas d'une automatisation complète, il peut être envisagé d'agencer le premier élément avec des moyens facilitant l'avancement de la gaine. Ces moyens peuvent être réalisés comme illustrés aux figures 15A, 15B, 15C sous forme de petits rouleaux ou billes (17) régulièrement ou non répartis, sur la périphérie dudit élément (14).

Les avantages ressortent bien de l'invention. On souligne la simplicité du procédé et sa parfaite adaptabilité, à tout type de diamètre de boyaux. En outre, le produit obtenu est d'un prix de revient très réduit compte tenu des modalités de sa fabrication. Il est également possible d'adapter la longueur des boyaux à la dimension de la canule.

## Revendications

1. Procédé pour la préparation de boyaux naturels en charcuterie, du type dans lequel on utilise une gaine en matière plastique (1) sur laquelle on enfile et on plisse une succession de tronçons de boyaux avec chevauchement des extrémités de ces derniers, ladite gaine étant enfilée sur la canule (C) d'un poussoir de remplissage, en vue d'une opération d'embossage de la viande, caractérisé en ce que l'on utilise un moyen support faisant office de gaine, préalablement en forme de feuille plate, découpée aux formés et dimensions à obtenir, ledit moyen support formant gaine (10) étant mis en forme tubulaire par une ou des déformations et enroulements successifs avec un faible chevauchement de ses bordures longitudinales, la gaine ainsi obtenue recevant le boyau puis étant disposée sur la canule (C).

2. Procédé selon la revendication 1, caractérisé en ce que la gaine (10) présente à l'avant une forme en pointe ou biseau (10.1) et à sa partie arrière une partie découpée en forme de languette (10.2).

3. Procédé selon la revendication 1, caractérisé en ce que la gaine est préenroulée en bobine avec des formes préétablies et prédécoupées.

4. Procédé selon la revendication 1, caractérisé en ce que la gaine se présente sous la forme de différentes feuilles à plat après découpage.

5. Procédé selon l'une quelconque des revendications 1 et 4, caractérisé en ce que la gaine (10) est enroulée manuellement et introduite dans un tube (11), les extrémités de ladite gaine se chevauchant, et en ce que le boyau (12) est monté sur le tube, et en ce que l'on procède à l'enlèvement du tube, le boyau venant en contact avec la gaine, celle-ci étant alors enfilée sur la canule (C) ; après mise en place, la gaine est retirée de la canule et le boyau étant en contact sur la canule pour l'opération d'embossage.

6. Procédé selon l'une quelconque des revendications 1, 2 et 3, caractérisé en ce que, dans un processus d'automatisation, la gaine est enroulée en bobine, et son extrémité est déroulée puis introduite dans un dispositif (13) de mise en forme autorisant à sa sortie, une présentation de la gaine en rouleau avec des bordures longitudinales se chevauchant partiellement.

7. Procédé selon la revendication 6, caractérisé en ce que la gaine enroulée en bobine est introduite dans un premier élément (14) en forme d'entonnoir du dispositif (13) assurant une première mise en forme de la gaine sans chevauchement de ses extrémités longitudinales, puis celle-ci est introduite dans un second élément de forme tronconique mettant en forme de rouleau ladite gaine et assurant le chevauchement de ses bordures longitudinales, ladite gaine ainsi obtenue étant introduite dans un tube (16) de mise en forme finale.

8. Procédé selon la revendication 7, caractérisé en ce qu'à la sortie du dispositif (13), on procède à une opération de découpage de la gaine en 'rouleau ainsi obtenue.

9. Procédé selon la revendication 7, caractérisé en ce que le tube (16) constitue le support du boyau et en ce que l'on combine la mise en forme en continu de la gaine et la dépose du boyau sur le tube support (16).

10. Dispositif de mise en oeuvre du procédé selon l'une quelconque des revendications 1, 6, 7, 8 et 9, caractérisé en ce qu'il comprend un premier élément (14) formant entonnoir présentant un côté (14.1) aplati de largeur égale à la largeur de la bande de formation de la gaine et un côté cylindrique (14.2) dont la circonférence est sensiblement supérieure au diamètre de la gaine roulée, ledit élément (14) de section dégressive étant relié à un second élément (15) de forme tronconique ; et en ce que ledit second élément (15) présente une déformation (15.1) intérieure autorisant le guidage de la gaine préformée et le chevauchement partiel de ses extrémités longitudinales, et en ce que la gaine étant soit prédécoupée initialement, soit découpée par un moyen disposé à la sortie dudit dispositif (14).

## Patentansprüche

1. Verfahren für dir Vorbereitung von Naturdärmen für die Herstellung von Wurstwaren, für die man einen Schlauch aus Kunststoff (1) verwendet, auf dem man mehrere Darmlängen mit Überlappung der Enden auffädelt und diese Darmlängen zusammenfaltet. Dieser Schlauch wird auf das Füllrohr eines Wurstfüllers aufgefädelt, um das Einfüllen der Wurstmasse vornehmen zu können. Die Fleischeinfüllung ist dadurch charakterisiert, daß man ein Trägermaterial verwendet, das als Schlauch dient, das vorher in glatte Folien, entsprechend den gewünschten Abmessungen geschnitten ist, das so beschriebene Trägermaterial bildet den Schlauch (10), indem es durch eine oder mehrere aufeinanderfolgende Verformungen und Einrollungen in eine Rohrform mit leichten Überlappungen an den Längsrändern gebracht wird, der so entstandenen Schlauch nimmt den Darm auf und wird in der Folge auf das Füllrohr (C) aufgebracht

2. Verfahren nach Anspruch 1, dadurch gekennzeichnet, daß die Folie (10) an der Vorderseite eine spitze oder angeschrägt Form (10.1) aufweist und an der Hinterseite einen zungenförmig (10.2) eingeschnittenen Bereich aufweist.

3. Verfahren nach Anspruch 1, dadurch gekennzeichnet, daß die Folie auf einer Rolle voreingerollt ist, mit vorbestimmten und vorgeschnitten Formen.

4. Verfahren nach Anspruch 1, dadurch gekennzeichnet, daß der Schlauch in Form von verschiedenen, glatten Folien nach dem Abscheiden vorliegt.

5. Verfahren, sowohl nach Anspruch 1 und 4, dadurch gekennzeichnet, daß die Folie (10) händisch eingerollt wird und in ein Rohr (11) eingeführt wird, die Enden dieser so beschriebenen Folie überlappen sich, und da sich der Darm (12) auf dem Rohr befindet und wenn man das Rohr entfernt, kommt der Darm in Kontakt mit dem Schlauch, dieser wurde somit auf das Füllrohr (C) aufgefädelt; nach diesem Vorgang wird der Schlauch vom Füllrohr entfernt und der Darm befindet sich in Kontakt mit dem Füllrohr, um das Einfüllen vornehmen zu können.

6. Verfahren sowohl nach Anspruch 1, 2 und 3, dadurch gekennzeichnet, daß bei einem automatisierten Verfahren die Folie auf einer Rolle aufgewickelt ist, sie wird dann abgerollt und in eine Formvorrichtung (13) eingeführt, die es beim Austritt ermöglicht, eine Folie in Rollenform mit teilweise überlappten Längsrändern zu erhalten.

7. Verfahren nach Anspruch 6, dadurch gekennzeichnet, daß die auf einer Rolle aufgewickelte Folie in ein trichterförmiges, erstes Teil (14) der Vorrichtung (13) eingeführt wird, um ein erstes Formen der Folie ohne Überlappung der Längsenden zu gewährleisten, dann wird sie in ein kegelstumpfartiges, zweites Teil eingeführt, das die beschriebene Folie in Rollenform bringt und das Überlappen der Längsränder gewährleistet und die so erhaltenen Folie wird in ein Rohr (16) für die Endformgebung eingeführt.

8. Verfahren nach Anspruch 7, dadurch gekennzeichnet, daß man am Austritt der Vorrichtung (13) das Ab-schneiden der auf diese Weise hergestellten, eingerollten Folie durchführt.

9. Verfahren nach Anspruch 7, dadurch gekennzeichnet, daß das Rohr (16) den Träger für den Darm darstellt und daß man die kontinuierliche Formgebung der Folie mit dem Ablegen des Darmes auf dem Trägerrohr (16) kombiniert.

10. Vorrichtung für die Durchführung des Verfahrens nach irgendeiner der Ansprüche 1, 6, 7, 8 und 9, dadurch gekennzeichnet, daß sie aus einem ersten Teil (14) besteht, in Trichterform, bestehend aus einer Seite (14.1), abgeflacht auf die gleiche Breite wie die Breite der Folie an der Seite, die die rollenförmige Folie bildet und einer zylindrischen Seite (14.2), dessen Umfang etwas größer ist, als der der eingerollten Folie, das beschriebene Teil (14) mit abnehmenden Querschnitt ist mit einem zweiten Teil (15), in kegelstumpfartiger Form, verbunden; da dieses zweite Teil (15) eine Verformung (15.1) auf der Innenseite aufweist, erlaubt es die Führung der vorgeformten Folie und das teilweise Überlappen der Längsränder und in Bezug auf die Folie, die entweder von Anfang an vorgeschnitten ist, oder am Austritt der beschriebenen Vorrichtung (14) mit einer Schneidvorrichtung abgeschnitten wird.

## Claims

1. Process for preparing natural guts in the pork meat industry of the type in which one uses a plastic sheath (1) on which one puts and folds a succession of sections of guts with overlapping of the ends of the latter, the aforementioned sheath being put on the cannula (c) by a filling machine with a view to securing the meat, characterised by using a means of support which serves as the sheath, which was previously in the shape of a flat sheet, cut into shapes and sizes to be obtained, the aforementioned means of support shaping the sheath (10) into a tubular shape by one or several successive deformations and rolls with a slight overlapping of the longitudinal edges, the sheath is thus obtained receiving the guts then being placed on the cannula (c).

2. Process in accordance with claim 1, characterised in such a way that the sheath (10) has a pointed or bevelled shape at the front (10.1) and at the rear end, a part cut off in the shape of a tongue (10.2).

3. Process in accordance with claim 1, characterised in such a way that the sheath is pre-rolled into a coil with pre-established and pre-cut shapes.

4. Process in accordance with claim, characterised in such a way that the sheath is in the shape of different flat sheets after cutting.

5. Process in accordance with one of the claims 1 to 4, characterised in such a way that the sheath (10) is rolled up by hand and inserted in a tube (11), the ends of which overlap and the afore-mentioned guts (12) are put on the tube, and one proceeds to removing the tube, the guts come into contact with the sheath, this being put on the cannula (c), after setting this up, the sheath is removed from the cannula and the guts are in contact on the cannula for the securing operation.

6. Process in accordance with one of the claims, 1, 2 and 3, characterised in such a way that in an automation process the sheath is rolled up in a coil and its end is unrolled then inserted in a device (13) giving it its shape when it comes out, in the form of a roll with the longitudinal edges partially overlapping.

7. Process in accordance with claim 6, characterised in such a way that the rolled-up sheath in the shape of a coil is inserted in the first element (14), in the shape of a funnel, of the device (13) ensuring an initial shaping of the sheath without overlapping its longitudinal edges, then this is inserted in the second element in the shape of a flattened cone, shaping the aforementioned sheath into a roll and ensuring overlapping of its longitudinal edges, the aforementioned sheath thus obtained being inserted in a tube (16) for the final shaping.

8. Process in accordance with claim 7, characterised in such a way that when coming out of the device (13) one proceeds to a cutting operation of the rolled sheath obtained.

9. Process in accordance with claim 7, characterised in such a way that the tube (16) is made up of the guts support and one combines the continuous shaping of the sheath and the depositing of the guts on the supports tube (16).

10. Device for setting up the process in accordance with one of the claims 1, 6, 7, 8 and 9, characterised in such a way that it includes an initial element (14) in the shape of a funnel with one side (14.1) flat width equal to the width of the strip shaping side of the sheath and a cylindrical side (14.2) the circumference of which is slightly greater than the diameter of the rolled sheath, the aforementioned element (14) of degressive section being joined to a second element (15) with a shape of a flattened cone and characterised in such the second element (15) include an inside deformation (15.1) permitting the guiding of the pre-shaped sheath and the partial overlapping of its longitudinal edges and the sheath being initially pre-cut, either cut by means at the exit of the aforementioned device (14).
